Europäisches Patentamt

European Patent Office

Office européen des brevets

(19)

(11) **EP 0 654 945 B1**

(12) **FASCICULE DE BREVET EUROPEEN**

(45) Date de publication et mention
de la délivrance du brevet:
**28.10.1998 Bulletin 1998/44**

(51) Int Cl.[6]: **H04N 5/33, H04N 5/217**

(21) Numéro de dépôt: **94402629.3**

(22) Date de dépôt: **18.11.1994**

(54) **Circuit d'injection, en imagerie thermique**

Ladungseinspritzschaltung zur thermischen Abbildung

Injection circuit for thermal imaging

(84) Etats contractants désignés:
**DE FR GB IT NL**

(30) Priorité: **23.11.1993 FR 9313986**

(43) Date de publication de la demande:
**24.05.1995 Bulletin 1995/21**

(73) Titulaire: **THOMSON-CSF**
**75008 Paris (FR)**

(72) Inventeurs:
• **Besnard, Véronique**
**F-92402 Courbevoie Cédex (FR)**
• **Audier, Marcel-Francis**
**F-92402 Courbevoie Cédex (FR)**

(74) Mandataire: **Lincot, Georges et al**
**Thomson-CSF Propriété Intellectuelle,**
**13, Avenue du Président Salvador Allende**
**94117 Arcueil Cédex (FR)**

(56) Documents cités:
**EP-A- 0 354 106**          **EP-A- 0 521 255**
**EP-A- 0 553 406**          **DE-A- 3 625 010**
**FR-A- 2 505 589**          **FR-A- 2 506 546**

• **PATENT ABSTRACTS OF JAPAN vol. 12, no. 9
(E-572) 12 Janvier 1988 & JP-A-62 171 213 (NEC
CORP.) 28 Juillet 1987**
• **PATENT ABSTRACTS OF JAPAN vol. 6, no. 145
(P-132) 4 Août 1982 & JP-A-57 066 324 (SHARP
CORP.) 22 Avril 1982**
• **PATENT ABSTRACTS OF JAPAN vol. 5, no. 186
(E-84) 25 Novembre 1981 & JP-A-56 111 382
(HITACHI SEISAKUSHO K.K.) 3 Septembre 1981**

## Description

La présente invention se rapporte au traitement de signal en imagerie et concerne un circuit d'injection pour l'interface, dans une caméra à imagerie thermique, entre le réseau de détecteurs individuels et le circuit de lecture, qui transforme les informations thermiques reçues en informations électriques. Ce circuit d'interface, en technologie MOS contrôle et lit soit des éléments de détecteurs photovoltaïques, fonctionnant dans les bandes I, II ou III, soit des photoconducteurs à haute impédance, tels que les détecteurs multi-puits quantiques. L'invention s'applique également à l'imagerie photonique, moyennant l'adaptation des détecteurs.

En détection infrarouge, les deux bandes spectrales les plus propices sont 3 à 5 µm et 8 à 12 µm car l'atmosphère terrestre est transparente à ces bandes. Les photodétecteurs les plus utilisés, pour ces longueurs d'ondes, sont les semiconducteurs du groupe II-VI, en particulier l'alliage ternaire HgCdTe (mercure-cadmium-tellure), qui ont l'inconvénient de fournir leur meilleur rendement à 77°K de sorte que les photodétecteurs sont toujours placés dans un cryostat qui fonctionne à 77°K et est une enceinte à vide.

Par ailleurs, les photodétecteurs se présentent, du point de vue géométrique, comme des circuits intégrés de diodes qui sont disposées soit en nappes, par exemple de 256X256 pixels, soit en barrettes, par exemple de 1500 pixels X 4 lignes associées. Il est évident que plus nombreux sont les pixels et meilleure est l'image, mais on ne sait, dans les faits, pas faire passer plus de 200-220 connexions à travers l'enveloppe du cryostat qui est sous vide, ce qui est tout à fait incompatible avec les milliers de connexions qui seraient nécessaires avec les photodétecteurs que l'on sait actuellement réaliser.

La solution connue consiste à multiplexer les signaux provenant des photodétecteurs à les intégrer-dans le cas d'un balayage d'image en lignes ou en colonnes- dans un circuit à transfert de charges dit CCD, et à faire sortir du cryostat les signaux en série, ce qui simplifie la connectique. Ainsi, chaque élément de détection est généralement couplé à un multiplexeur, réalisé en technologie silicium CMOS ou CCD, convertissant les nombreux signaux détecteurs en un signal vidéo unique.

L'interface détecteur-multiplexeur est le plus souvent un circuit de lecture dont le rôle est, d'une part de contrôler avec une grande précision la polarisation du détecteur, d'autre part d'intégrer le courant photoélectrique durant une période de temps déterminée.

C'est cet interface qui est l'objet de l'invention.

L'ensemble du circuit intégré de photodétecteurs, de l'interface et du multiplexeur est monté en circuit hybride sandwiché, les deux matériaux semiconducteurs étant différents, et placé à l'intérieur de l'enceinte du cryostat. Le tout est couramment dénommé un "plan focal" d'appareil d'imagerie thermique.

Selon l'art connu, cet interface est fait selon deux approches principales qui ont souvent été décrites et sont aujourd'hui couramment utilisées dans les nouvelles générations d'imageurs thermiques.

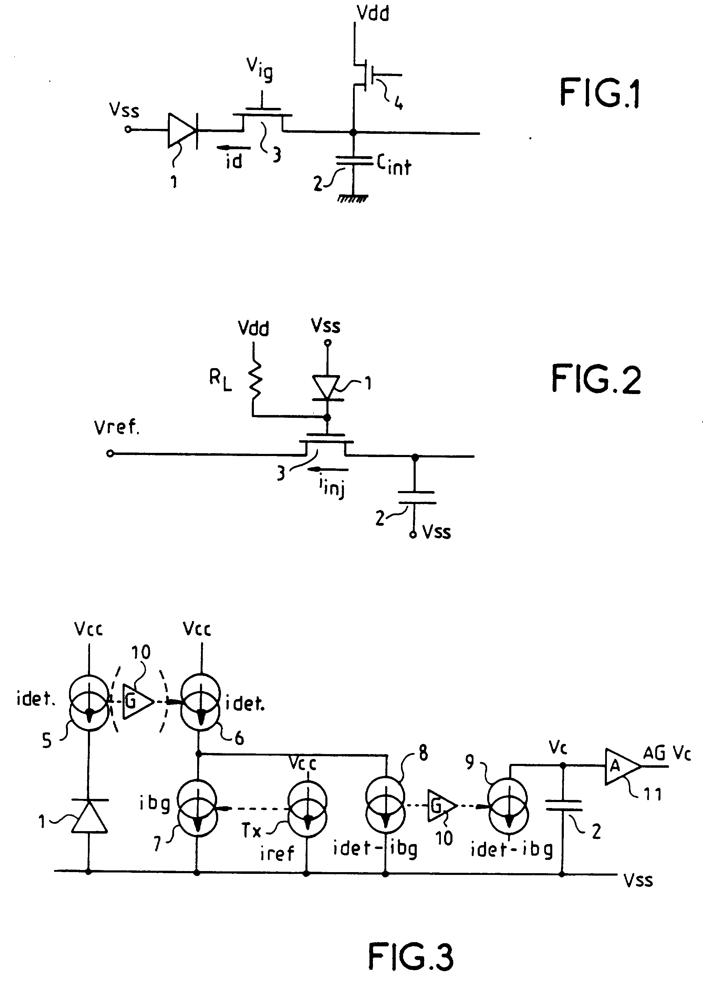

La première schématisée en figure 1, réalise l'injection directe du courant délivré par un photo-détecteur 1 dans un élément intégrateur 2, qui est une capacité MOS ou un puits induit de potentiel CCD, au moyen d'un transistor MOSFET 3 monté en grille commune. Un second transistor 4 sert à "lire" la charge accumulée dans l'intégrateur 2.

Les principaux inconvénients de cette méthode sont d'une part la dépendance du potentiel détecteur en fonction du taux de remplissage de l'intégrateur d'autre part la non discrimination entre le signal généré par la température de fond de la scène observée et celui, utile, engendré par l'incrément de température lié à l'objet observé. Cette différence de température ne représentant qu'une petite fraction du signal de fond, 1/100 à 1/1000 par exemple, il est généralement nécessaire, en fin de période d'intégration de soustraire la plus grande partie du signal de fond puis de lire le signal résiduel à l'aide d'une électronique très bas bruit.

La seconde approche, illustrée en figure 2, consiste à réaliser une injection indirecte du courant délivré par le photodétecteur 1, dans l'élément intégrateur 2, au moyen d'un transistor MOSFET 3, monté en source commune, dont la grille est modulée par le potentiel photovoltaïque développé aux bornes du détecteur 1, polarisé en inverse entre VDD et VSS. Une telle méthode permet de supprimer le signal issu de la température de fond de la scène, mais présente l'inconvénient d'impliquer le contrôle du point de fonctionnement de l'élément de détection 1 par un circuit de polarisation à très haute impédance $R_L$. De plus, la relation courant injecté-flux modulé détecté n'est pas linéaire.

En fait, dans les deux cas, les circuits d'injection développés pour interface détecteurs et multiplexeurs CMOS présentent, selon le type utilisé, des performances limitées.

Une première limitation résulte de la grande quantité de charges produite par le signal de fond continu de l'image. Ce signal est engendré d'une part, par la température de fond de la scène observée et d'autre part par le courant de polarisation du détecteur, important dans le cas de photoconducteurs. L'intégration de ce signal continu, généralement très supérieur au signal utile correspondant aux différentielles de température de la scène observée, limite considérablement la dynamique de l'intégrateur. De plus, un tel circuit exige :

- soit, une grande capacité de stockage, donc une grande surface de silicium, par élément de détection,
- soit, une courte durée d'intégration réduisant fortement le rapport Signal/Bruit. En effet, le signal est proportionnel au nombre N de photons reçus, et le bruit est proportionnel à la racine $\sqrt{N}$. Le rapport S/B est donc proportionnel à $\sqrt{N}$, soit encore à la racine du temps d'intégration $\sqrt{T_i}$.

Une seconde difficulté concerne la mise en oeuvre de barrettes balayées optomécaniquement et comprenant de petits éléments de détection fonctionnant dans la bande II du spectre IR. Dans de telles applications, la quantité de charges intégrées est faible. Les plus petites capacités d'intégration réalisables étant limitées par les capacités parasites à des valeurs d'environ 100 fF, le facteur de conversion, exprimé en volts par degré, est souvent insuffisant pour des temps d'intégration de quelques dizaines de microsecondes. Les faibles variations d'amplitudes de tension obtenues en fin d'intégration rendent extrêmement difficile le multiplexage sans dégradation du rapport Signal/Bruit.

Ces inconvénients de l'art connu sont parmi d'autres motifs liés au fait que l'impédance du circuit du photo-détecteur change pendant la durée de l'intégration, ce qui change également les caractéristiques du photo-détecteur parce que le courant de détection $i_{dét}$ est consommé.

La solution proposée permet de réaliser un circuit d'injection CMOS compatible de détecteurs photovoltaïques fonctionnant dans les bandes II ou III ou de détecteurs photoconducteurs de haute impédance tels que ceux à multi-puits quantiques.

Les performances de ce circuit reposent sur le traitement préalable du courant issu de chaque élément de détection avant de procéder à son intégration : le courant de détection est d'abord recopié au moyen d'un miroir de courant, de telle sorte que l'impédance du circuit du photodétecteur, qui inclut la branche maîtresse de ce miroir de courant, ne change pas. Ensuite, chaque fonction intégrée est construite autour d'une branche spécialisée d'autres miroirs de courants, et peut être optimisée séparément.

Les opérations successivement réalisées sont les suivantes :

- polarisation de l'élément de détection sous une tension maintenue constante en fonction du débit du détecteur et de la durée de l'intégration,
- soustraction du signal utile, le coefficient d'amplification pouvant être ajusté afin que le niveau de signal transmis soit compatible avec l'électronique de traitement aval,
- intégration et conversion charge-tension
- extraction du signal en fin d'intégration.

De façon plus précise, l'invention concerne un circuit d'intégration, en imagerie thermique, des courants issus d'éléments photodétecteurs vers un multiplexeur, avec intégration séquentielle des dits courants, ce circuit d'injection étant caractérisé en ce qu'il comporte au moins :

- un premier miroir de courant de polarisation de l'élément détecteur inséré dans la branche d'entrée de ce miroir, dont la branche de sortie assure la recopie du courant de détection
- un second miroir de courant de soustraction de la composante continue de fond d'image, dont la branche d'entrée fournit un courant de référence, proportionnel à la dite composante continue, et recopié par la branche de sortie du second miroir, qui est connectée en série avec la branche de sortie du premier miroir, en un point qui délivre un courant utile pour la formation d'une image.

L'invention concerne également le procédé de traitement des signaux thermiques issus en parallèle des photodétecteurs pour les intégrer sous forme de charges électriques stockées dans un circuit CMOS ou CCD, à l'intérieur du cryostat, et sortir ces charges électriques en série, afin de former une image de type vidéo.

L'invention sera mieux comprise par l'exposé d'un exemple de réalisation, qui sera fait en liaison avec les figures jointes en annexe, qui représentent:

- figures 1 et 2 : schémas électriques d'interfaces entre photodétecteurs et multiplexeur, selon l'art connu, précédemment exposés.
- figure 3 : schéma fonctionnel de l'interface selon l'invention,
- figure 4 : circuit de polarisation de l'élément de détection, selon l'invention
- figure 5 : circuit de soustraction de la composante continue dans le signal thermique, selon l'invention,
- figure 6 : circuit d'amplification et d'intégration du courant utile, selon l'invention,
- figure 7 : schéma d'ensemble du circuit d'interface selon l'invention,
- figure 8 : variante au schéma de la figure précédente.

La figure 3 donne le schéma de principe du circuit d'interface selon l'invention. Le fonctionnement de ce circuit repose sur l'utilisation d'amplificateurs à miroirs de courants, simples ou complexes, qui comptent parmi les éléments de base des architectures développées en microélectronique : il y a au moins deux miroirs de courant dans ce circuit d'interface, ou trois en comptant l'étage d'intégration : ces miroirs de courants seront détaillés plus loin.

Dans le premier étage, un premier miroir de courant a comme branche d'entrée le circuit de polarisation du détecteur 1 par une source 5 qui fournit un courant $i_{dét}$.

Le second étage est constitué par un second miroir de courant, schématisé ici par un générateur 7 qui débite un courant $i_{bg}$ proportionnel au bruit de fond de l'image observée. La particularité de ce second étage est que la branche d'entrée du second miroir de courant est en série avec la branche de sortie du premier miroir de courant, de sorte que le point commun à ces deux branches constitue un générateur 8 qui débite un courant égal à la différence entre le courant du détecteur et le courant de bruit de fond : $i_{dét} - i_{bg}$.

Le troisième étage est constitué par un troisième miroir de courant, dont la branche d'entrée est le générateur 8 ($i_{dét} - i_{bg}$) et la branche de recopie le générateur 9 parcouru par un courant G($i_{dét} - i_{bg}$): en effet , il est avantageux d'amplifier le signal avant son intégration, au moyen d'un amplificateur 10 qui est ici représenté dans le troisième miroir de courant, mais qui est encore plus avantageusement situé dans le premier miroir de courant. Dans ce cas, $G.i_{dét} - i_{bg}$ est supérieur à G ($i_{dét} - i_{bg}$).

Il ne reste qu'à intégrer ce courant dans une capacité d'intégration 2, soumise à une tension $V_c$ et, suivie d'un amplificateur 11 de lecture de potentiel résiduel.

Chacun de ces miroirs de courant va être maintenant décrit avec plus de détails mais restent cependant symbolisés par un transistor pour chaque branche, afin de simplifier les figures.

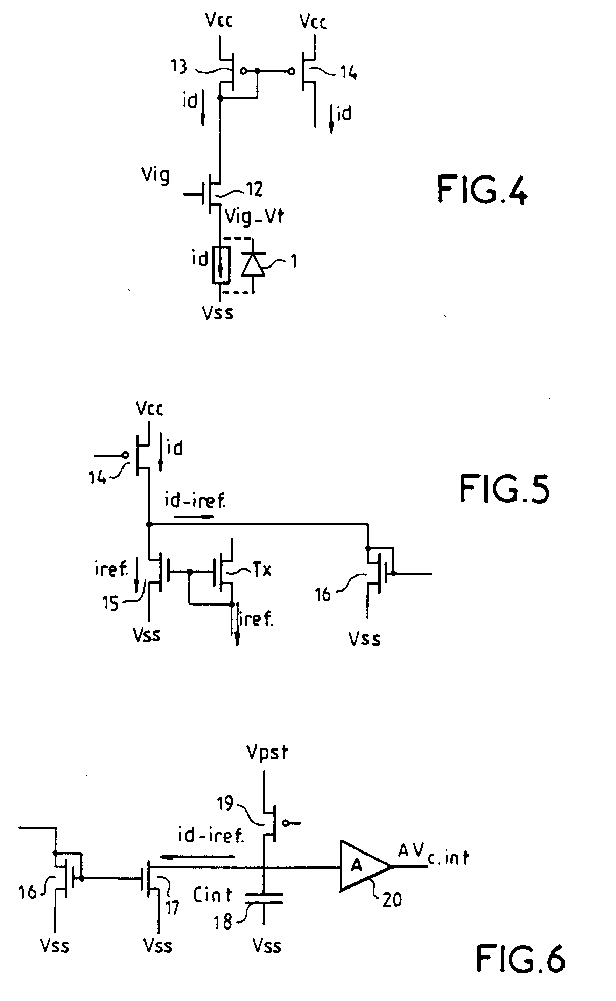

La figure 4 représente le circuit de polarisation d'un élément détecteur 1 ayant une impédance suffisante pour que le courant global $i_d$ (polarisation et photoélectrique) qui le traverse soit totalement injecté dans le canal du MOSFET " grille commune" 12 qui lui est connecté. Ce courant n'étant pas intégré, la tension de drain du transistor d'injection 12 reste quasi constante au cours de la période d'intégration, permettant ainsi de maintenir constante la polarisation du détecteur 1 dont la valeur, la précision et la stabilité ne dépendent que du potentiel $V_{ig}$ appliqué à la grille du transistor.

Pour les éléments détecteurs de faibles impédances un rendement d'injection de 100% peut être obtenu à l'aide d'un circuit dynamique compensé, non représenté ici, parce qu'un tel circuit permet d'obtenir une forte augmentation de transconductance du MOSFET d'entrée 12 en amplifiant et reportant sur sa grille les variations de potentiel du détecteur. Plusieurs circuits de cette nature sont décrits dans la littérature.

Dans chaque cas, le courant $i_d$ du détecteur traverse la branche d'entrée, représentée par le transistor 13, d'un premier miroir de courant, dont la branche de recopie, représentée par le transistor 14, réalise une copie du courant $i_d$, avec un coefficient d'amplification fixé par le rapport des transconductances des transistors utilisés dans chacune des branches.

La figure 5 représente le schéma électrique du circuit de soustraction de composante continue. La branche de sortie 14 du premier miroir de courant est associée en série avec la branche de sortie 15 d'un second miroir de courant. Ce second miroir duplique un courant de référence qui peut être généré en périphérie du multiplexeur : sa branche d'entrée est symbolisée sur la figure 5 par un transistor que, pour l'instant, on appellera $T_x$, et sur lequel on reviendra ultérieurement. Ce second miroir de courant peut, comme le premier miroir, avoir un gain amplificateur.

Le courant complémentaire correspondant à la différence entre le courant généré $i_d$ par le détecteur et celui pris comme référence $i_{ref}$ est fourni par la branche d'entrée 16 d'un troisième miroir connecté au noeud commun des deux précédents 14-15.

En réglant, d'une part le courant de référence $i_{réf}$ de telle sorte qu'il soit proportionnel à la somme du courant de polarisation du détecteur et du courant de fond $i_{bg}$ engendré par la température de fond de la scène, d'autre part les coefficients d'amplification des deux premiers miroirs de courant 13+14 et 15 + Tx, la branche d'entrée 16 du troisième miroir est traversée par un courant directement proportionnel aux différentielles de températures de la scène.

L'amplification de ce courant utile est alors fixée par le coefficient d'amplification du troisième miroir de courant 16 + 17. La branche de sortie 17 de ce dernier miroir fait partie du circuit intégrateur.

L'intégrateur, représenté en figure 6, est constitué d'un élément capacitif 18, ou capacité d'intégration $C_{int}$, préchargé en début de période d'intégration par le transistor 19 à une tension positive constante $V_{pst}$ et déchargé au cours du temps par le courant délivré par la branche de sortie 17 du troisième miroir. L'extraction du signal intégré est faite, en fin de période, par la lecture du potentiel résiduel de la capacité d'intégration 18, au moyen d'un amplificateur 20.

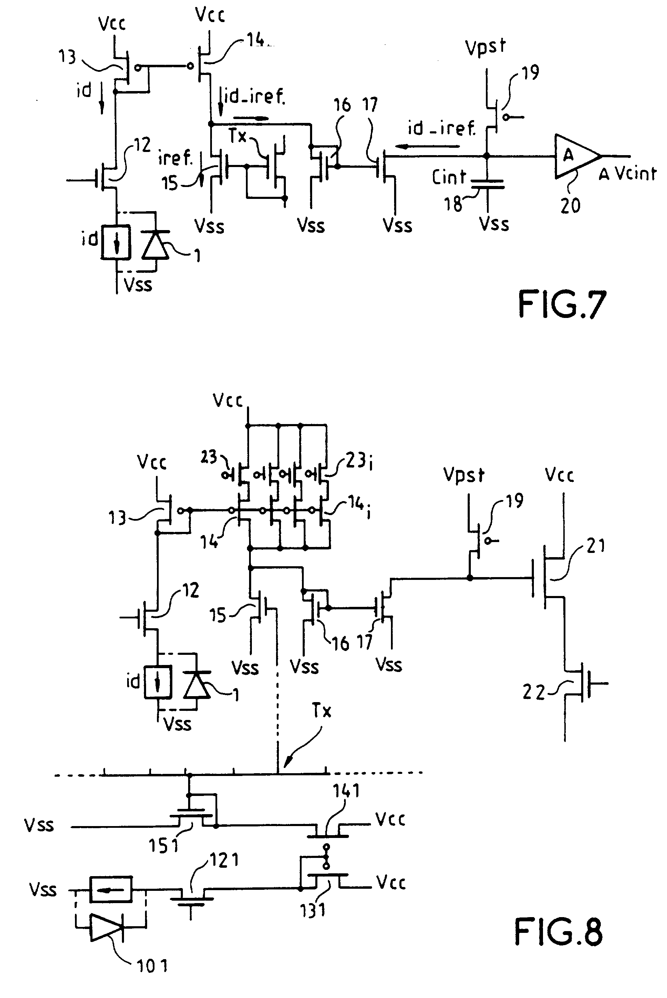

La figure 7 donne le schéma d'ensemble du circuit d'injection selon l'invention, et est constituée par le raccordement des figures 4,5 et 6.

Plusieurs variantes à l'invention sont possibles et réunies sur la figure 8.

En premier lieu, l'élément d'intégration 18 peut être constitué par la grille d'un transistor MOS 21, utilisé en source suiveuse comme étage de sortie au cours de la séquence de lecture, qui se fait par le transistor 22 monté en série avec le transistor 21.

Ensuite, l'un des miroirs de courant, le troisième mais préférentiellement le premier, peut comporter plusieurs branches de sortie montées en parallèle et commandables séparément, ce qui rend réglable le gain du miroir considéré. Cette variante est représentée sur la branche de sortie du premier miroir : transistors $14_i$ et $23_i$. En choisissant les coefficients d'amplification de chaque couple formé par la branche d'entrée et la $i^{ème}$ branche de sortie, on obtient, par association de ces branches, un circuit à gain réglable à $2^n$-1 positions, "n" étant le nombre de branches de sortie.

Enfin, la branche de recopie 15 du second miroir de courant, fournissant le courant de référence iréf soustrait du courant id délivré par chaque élément de détection, est pilotée par une branche d'entrée qui a été appelée $T_x$. Cette branche $T_x$ peut être :

- soit une source extérieure, stable, fixe ou variable,
- soit un élément de détection, identique à ceux qui forment l'image thermique, mais qui reçoit le rayonnement d'une source à température fixe, proche de la température de fond de la scène analysée. Sur la figure 8, ce circuit de référence est représenté sous la forme d'un quatrième miroir de courant qui est l'image du premier miroir de courant : sa branche d'entrée 121 + 131 comprend un détecteur 101 qui "regarde" une température fixe, et sa branche de sortie 141 + 151 fournit iréf au second miroir de courant. Cette branche $T_x$ peut être reliée à un bus qui distribue séqentiellement i réf à plusieurs circuits d'injection selon la figure 7 ou ses variantes de la figure 8.

Par ailleurs, il est évident que les différents miroirs de courant peuvent être de schémas plus perfectionnés que ceux représentés de façon simplifiée. Parmi les nombreux types connus, ces miroirs peuvent être simples, cascadés, actifs, bufférisés, de Wilson, etc., sans sortir du domaine de l'invention.

Sur les figures, les transistors 13,14 et 19 sont des MOS de type P, les autres transistors sont de type N, mais il est bien entendu que la technologie peut être adaptée si ce circuit d'injection est utilisé pour un autre type d'imagerie que l'imagerie thermique.

## Revendications

1. Circuit d'injection, en imagerie thermique, des courants issus d'éléments photodétecteurs (1) vers un multiplexeur, avec intégration séquentielle des dits courants, ce circuit d'injection étant caractérisé en ce qu'il comporte au moins :

   - un premier miroir de courant (13,14) de polarisation de l'élément détecteur (1) inséré dans la branche d'entrée (13) de ce miroir, dont la branche de sortie (14) assure la recopie du courant de détection ($i_d$).
   - un second miroir de courant ($T_x$,15) de soustraction de la composante continue de fond d'image , dont la branche d'entrée ($T_x$) fournit un courant de référence ($i_{réf}$) proportionnel à la dite composante continue et recopié par la branche de sortie (15) du second miroir qui est connectée en série avec la branche de sortie du premier miroir (14) en une borne qui délivre un courant utile ($i_d$ - $i_{réf}$) pour la formation d'une image.

2. Circuit d'injection selon la revendication 1, caractérisé en ce qu'il comporte en outre un troisième miroir de courant (16,17) dont :

   - la branche d'entrée (16), connectée à la borne commune entre les branches de sorties des premier (14) et second (15) miroirs de courant, est parcourue par le courant utile ($i_d$ - $i_{ref}$),
   - la branche de sortie (17), en série avec une capacité d'intégration (18) préchargée, est parcourue par un courant de décharge de la dite capacité, jusqu'à l'équilibre entre les deux voies d'entrée (16) et de sortie (17) du dit troisième miroir de courant.

3. Circuit d'injection selon la revendication 1, caractérisé en ce que le premier miroir de courant (13,14) comporte une amplification entre sa branche d'entrée ($i_d$) et sa branche de sortie , dotée d'un gain en courant ($G_{id}$).

4. Circuit d'injection selon la revendication 3, caractérisé en ce que le gain est programmable, la branche de sortie (14) du premier miroir comportant une pluralité de transistors de recopie (14,...,14$_i$) montés en parallèle, chaque transistor de recopie (14,..,14$_i$) étant commandé par un transistor de sélection (23,.,23$_i$).

5. Circuit d'injection selon la revendication 1, caractérisé en ce que la branche d'entrée ($T_x$) du second miroir de courant est constituée par une source extérieure de courant constant.

6. Circuit d'injection selon la revendication 1, caractérisé en ce que la branche d'entrée ($T_x$) du second miroir de courant est pilotée par un quatrième miroir de courant (131, 141) dont la branche d'entrée (131) comprend un détecteur (101) lié à une source de température fixe, et dont la branche de sortie (141) fournit le courant de référence ($i_{réf}$) recopié par la branche de sortie du second miroir de courant (15, $T_x$)

7. Circuit d'injection selon l'une quelconque des revendications 5 ou 6, caractérisé en ce que la branche d'entrée ($T_x$) du second miroir de courant est commune à une pluralité de branches de sorties (15) d'une même pluralité de seconds miroirs.

8. Circuit d'injection selon la revendication 2, caractérisé en ce que la capacité d'intégration (18) est constituée par un transistor MOSFET (21) monté en source suiveuse.

## Patentansprüche

1. Schaltung zur Injektion der von Photodetektorelementen (1) kommenden Ströme in einen Multiplexer im Rahmen der Wärmebildtechnik, mit sequentieller Integration dieser Ströme, dadurch gekennzeichnet, daß die Schaltung mindestens aufweist:

   - einen ersten Polarisationsstromspiegel (13, 14) des Detektorelements (1), das in den Eingangszweig (13) dieses Spiegels eingefügt ist, während der Ausgangszweig (14) den Spiegelstrom des Detektorstroms ($i_d$) erzeugt,
   - einen zweiten Stromspiegel ($T_x$, 15) zur Sub-

traktion der Gleichstromkomponente des Bildhintergrunds, wobei der Eingangszweig ($T_x$) dieses Spiegels einen Bezugsstrom ($i_{ref}$) proportional zur Gleichstromkomponente liefert, der durch den Ausgangszweig (15) des zweiten Spiegels kopiert wird, und wobei dieser Ausgangszweig in Reihe mit dem Ausgangszweig (14) des ersten Spiegels über einen Anschluß verbunden ist, der einen Nutzstrom ($i_d$ - $i_{ref}$) für die Erzeugung eines Bilds liefert.

2. Injektionsschaltung nach Anspruch 1, dadurch gekennzeichnet, daß sie außerdem einen dritten Stromspiegel (16, 17) enthält,

- dessen Eingangszweig (16), der an den gemeinsamen Anschluß zwischen den Ausgangszweigen (14, 15) des ersten und des zweiten Stromspiegels angeschlossen ist, vom Nutzstrom ($i_d$ - $i_{ref}$) durchflossen ist,
- dessen Ausgangszweig (17), der mit einem vor-geladenen Integrationskondensator (18) in Reihe geschaltet ist, von einem Entladestrom dieses Kondensators durchflossen wird, bis zwischen dem Eingangszweig (16) und dem Ausgangszweig (17) des dritten Stromspiegels Gleichgewicht eintritt.

3. Injektionsschaltung nach Anspruch 1, dadurch gekennzeichnet, daß der erste Stromspiegel (13, 14) eine Verstärkung zwischen seinem Eingangszweig und seinem Ausgangszweig besitzt, die eine Stromverstärkung ($G_{id}$) aufweist.

4. Injektionsschaltung nach Anspruch 3, dadurch gekennzeichnet, daß der Verstärkungsgrad programmierbar ist, wobei der Ausgangszweig (14) des ersten Spiegels mehrere Spiegeltransistoren (14,..., $14_i$) in Parallelschaltung enthält und jeder Spiegeltransistor (14,...,$14_i$) von einem Auswahltransistor ($23,...,23_i$) gesteuert wird.

5. Injektionsschaltung nach Anspruch 1, dadurch gekennzeichnet, daß der Eingangszweig ($T_x$) des zweiten Stromspiegels von einer äußeren Quelle konstanten Stroms gebildet wird.

6. Injektionsschaltung nach Anspruch 1, dadurch gekennzeichnet, daß der Eingangszweig ($T_x$) des zweiten Stromspiegels von einem vierten Stromspiegel (131, 141) gesteuert wird, dessen Eingangszweig (131) einen an eine Quelle fester Temperatur gekoppelten Detektor (101) enthält, während der Ausgangszweig (141) den Bezugsstrom ($i_{ref}$) liefert, der von dem Ausgangszweig des zweiten Stromspiegels (15, $T_x$) kopiert wird.

7. Injektionsschaltung nach einem beliebigen der Ansprüche 5 und 6, dadurch gekennzeichnet, daß der Eingangszweig ($T_x$) des zweiten Stromspiegels für mehrere Ausgangszweige (15) einer gleichen Mehrzahl von zweiten Spiegeln gemeinsam wirksam ist.

8. Injektionsschaltung nach Anspruch 2, dadurch gekennzeichnet, daß der Integrationskondensator (18) von einem MOSFET-Transistor (21) gebildet wird, der als Folgerquelle geschaltet ist.

**Claims**

1. Injection circuit, for thermal imaging, for injecting currents from photodetector elements (1) into a multiplexer, with sequential integration of the said currents, this injection circuit being characterized in that it comprises at least:

- one first current mirror (13, 14) for biasing the detector element (1) inserted into the input branch (13) of this mirror, the output branch (14) of which provides for the duplicating of the detection current ($i_d$),
- one second current mirror ($T_x$, 15) for subtracting the image background DC component, the input branch ($T_x$) of which delivers a reference current ($i_{ref}$) proportional to the said DC component and duplicated by the output branch (15) of the second mirror, this branch being connected in series with the output branch of the first mirror (14) at a terminal which yields a useful current ($i_d$-$i_{ref}$) for the formation of an image.

2. Injection circuit according to Claim 1, characterized in that it furthermore comprises a third current mirror (16, 17):

- the input branch (16) of which, connected to the common terminal between the output branches of the first (14) and second (15) current mirrors, is traversed by the useful current ($i_d$-$i_{ref}$),
- the output branch (17) of which, in series with a precharged integrating capacitance (18), is traversed by a current for discharging the said capacitance, until there is equilibrium between the two paths, input (16) and output (17), of the said third current mirror.

3. Injection circuit according to Claim 1, characterized in that the first current mirror (13, 14) comprises an amplification between its input branch ($i_d$) and its output branch, having a current gain ($G_{id}$).

4. Injection circuit according to Claim 3, characterized in that the gain is programmable, the output branch (14) of the first mirror comprising a plurality of du-

plicating transistors (14, ..., $14_i$) connected in parallel, each duplicating transistor (14, ..., $14_i$) being controlled by a selection transistor (23 ..., $23_i$).

5. Injection circuit according to Claim 1, characterized in that the input branch ($T_x$) of the second current mirror consists of an outside source of constant current.

6. Injection circuit according to Claim 1, characterized in that the input branch ($T_x$) of the second current mirror is driven by a fourth current mirror (131, 141), the input branch (131) of which comprises a detector (101) linked to a fixed-temperature source, and the output branch (141) of which delivers the reference current ($i_{ref}$) duplicated by the output branch of the second current mirror (15, $T_x$).

7. Injection circuit according to either one of Claims 5 and 6, characterized in that the input branch ($T_x$) of the second current mirror is common to a plurality of output branches (15) of one and the same plurality of second mirrors.

8. Injection circuit according to Claim 2, characterized in that the integrating capacitance (18) consists of a MOSFET transistor (21) connected as a source follower.

# FIG.1

# FIG.2

# FIG.3

8

FIG.4

FIG.5

FIG.6

FIG.7

FIG.8